# EUROPEAN PATENT APPLICATION

(11) **EP 3 318 605 A1**
(43) Date of publication of application: **09.05.2018**
(21) Application number: 16817583.4
(22) Date of filing: 18.05.2016
(51) Int. Cl.: C08L 83/04, C08K 3/38, C08L 33/04

(54) **THERMOSETTING SILICONE RESIN COMPOSITION CONTAINING BORON NITRIDE, DISPERSANT FOR SILICONE RESIN COMPOSITIONS, AND INORGANIC FILLER**

(30) Priority: 01.07.2015 JP 2015133017
(71) Applicant: Showa Denko K.K., Tokyo 105-8518 (JP)
(72) Inventor: MINORIKAWA Naoki, Tokyo 105-8518 (JP); HIRANO Mizuki, Tokyo 105-8518 (JP); YAMADA Tomiharu, Tokyo 105-8518 (JP)
(74) Representative: Strehl Schübel-Hopf & Partner
(86) International application number: PCT/JP2016/064666
(87) International publication number: WO 2017/002474

(57) **Abstract**

The present invention provides: 1) a silicone resin composition, containing: a thermosetting silicone resin; an inorganic substance; and a dispersant, in which: the dispersant includes a copolymer of a (meth)acrylic acid ester having at least one polydimethylsiloxane structure and a (meth)acrylic acid alkyl ester; and the inorganic substance is boron nitride or a mixture of the boron nitride and an inorganic substance except the boron nitride; 2) a dispersant for a boron nitride-containing silicone resin composition, comprising the above-mentioned copolymer; and 3) an inorganic filler, comprising boron nitride or a mixture of the boron nitride and an inorganic substance except the boron nitride. The silicone resin composition of the present invention has a low viscosity and has stability against a mechanochemical treatment.

## Description

### Technical Field

The present invention relates to a (thermosetting) silicone resin composition containing boron nitride as an inorganic filler, and more specifically, to a silicone resin composition containing a dispersant formed of an acrylic acid ester copolymer or a methacrylic acid copolymer (both the copolymers are collectively referred to as "(meth)acrylic acid ester copolymer" herein) having a polydimethylsiloxane structure, which is capable of improving an effect of boron nitride to be added to the silicone resin composition, a dispersant for a boron nitride-containing silicone resin composition, and an inorganic filler containing the dispersant and boron nitride.

### Background Art

A composition (inorganic filler-silicone resin composition) obtained by dispersing an inorganic filler in a silicone resin has been widely used as a heat-radiating member for an electronic part having an insulating property and high thermal conductivity.

Examples of the inorganic filler to be generally used include alumina, aluminum nitride, zinc oxide, and boron nitride. In a resin composition having dispersed therein an inorganic filler formed of the boron nitride out of resin compositions using those inorganic fillers, an effect of a dispersant or a silane coupling agent hardly appears, and the viscosity of the resin composition hardly reduces.

Accordingly, the application development of an inorganic filler containing boron nitride has not been performed very often despite the fact that the filler has low flowability, high thixotropy, and high thermal conductivity. In such circumstances, a method of modifying the boron nitride has been investigated in each of the following patent literatures.

JP 5530318 B2 (Patent Literature 1) discloses the treatment of the surface of boron nitride with a silane coupling agent having a vinyl group in a molecular structure thereof. However, the literature relates to thermal conduction and moisture resistance, and in the literature, there is no disclosure concerning a reduction in viscosity or an improvement in dispersibility.

JP 11-209618 A (Patent Literature 2) discloses a silicone resin containing, in a wide range thereof, an inorganic filler treated with a silane coupling agent having an alkyl group. However, boron nitride is merely described as an example of the inorganic filler. In the literature, there is no description of a result of an investigation (example) in which the boron nitride is used, and hence an effect exhibited by the method of Patent Literature 2 in the case of the boron nitride is unknown.

In JP 2014-218468 A (Patent Literature 3), an acryl-silicone-based graft copolymer is given as an example of a component of a cosmetic formulation. However, its field of use is completely different from that of the present invention, and no attention has been paid to the dispersibility of boron nitride in the literature.

In JP 2014-199290 A (Patent Literature 4), there is a description of an example of the application of an acryl-silicone-based graft copolymer to the field of an electrophoretic display apparatus for colored resin particles. However, the application is completely different from that of the present invention, and in the literature, there is no description concerning a reduction in viscosity or an improvement in dispersibility.

In each of JP 02-25411 A (Patent Literature 5) and JP 2013-95705 A (Patent Literature 6), an acryl-silicone-based graft copolymer is applied as a component of a dispersant for a metal oxide in a cosmetic. In each of the literatures, however, the copolymer is applied in a field completely different from that of the present invention, such as a nail cosmetic, a basic cosmetic, a makeup cosmetic, or a hair cosmetic, and there is no idea about a reduction in viscosity of boron nitride or the dispersion thereof.

### Citation List

### Patent Literature

[PTL 1] JP 5530318 B2
[PTL 2] JP 11-209618 A
[PTL 3] JP 2014-218468 A
[PTL 4] JP 2014-199290 A
[PTL 5] JP 02-25411 A
[PTL 6] JP 2013-95705 A

### Summary of Invention

### Technical Problem

As described above, despite the fact that boron nitride has high thermal conductivity, sufficient investigations have not heretofore been performed on an improvement in dispersibility of the boron nitride and the reduction of a high viscosity of a silicone resin having added thereto an inorganic filler containing the boron nitride, and hence an investigation on an improvement in moldability of a silicone resin composition has been insufficient. In addition, the boron nitride involves an unsolved problem in that its stability against a mechanochemical reaction is low. Specifically, when the boron nitride is subjected to a mixing treatment under a high shear condition, the boron nitride decomposes to produce ammonia or an amine.

Therefore, an object of the present invention is to provide a dispersant capable of modifying and improving the dispersion characteristic of boron nitride in a silicone resin, and to provide a silicone resin composition having a low viscosity and having stability against a mechanochemical treatment.

### Solution to Problem

The inventors of the present invention have made extensive investigations to solve the problems, and as a result, have found that when a dispersant having a predetermined structure is used in a thermosetting silicone-based resin composition containing boron nitride as an inorganic filler, the following modification can be performed: the dispersion characteristic of the boron nitride in a silicone resin is improved; and even when a mixing treatment is performed under a high shear force, a mechanochemical reaction hardly occurs. Thus, the inventors have completed the present invention.

That is, the present invention relates to a silicone resin composition of the following items [1] to [5], a cured product of the following items [6] and [7], a dispersant for a boron nitride-containing silicone resin composition of the following items [8] to [13], and an inorganic filler of the following items [14] to [17].
[1] A silicone resin composition, containing: a thermosetting silicone resin; an inorganic substance; and a dispersant, in which: the dispersant includes a copolymer of a (meth)acrylic acid ester having at least one polydimethylsiloxane structure and a (meth)acrylic acid alkyl ester; and the inorganic substance is boron nitride or a mixture of the boron nitride and an inorganic substance except the boron nitride.
[2] The silicone resin composition according to [1] above, in which: a content of the inorganic substance with respect to a total of volumes of the thermosetting silicone resin and the inorganic substance (a volume of the inorganic substance/the total of the volumes of the thermosetting silicone resin and the inorganic substance) is from 30 vol% to 85 vol%; and the dispersant is incorporated in an amount of from 0.1 part by mass to 5.0 parts by mass with respect to 100 parts by mass of the inorganic substance.
[3] The silicone resin composition according to [1] or [2] above, in which the thermosetting silicone resin has an organopolysiloxane skeleton having at least one kind of thermosetting functional group selected from an acryloyl group, a methacryloyl group, an epoxy group, and a styryl group.
[4] The silicone resin composition according to any one of [1] to [3] above, further containing a silane coupling agent.
[5] The silicone resin composition according to [4] above, in which the silane coupling agent is an oligomer-type silane coupling agent.
[6] A cured product of the silicone resin composition of any one of [1] to [5] above.
[7] The cured product according to [6] above, in which a hardness of the cured product includes one of an Asker C hardness of 20 or more and less than 100, a type D durometer hardness of 20 or less, and a type A durometer hardness of from 5 to 95.
[8] A dispersant for a boron nitride-containing silicone resin composition, comprising an acryl-silicone copolymer formed of a structure obtained by copolymerizing a (meth)acrylic acid ester having at least one polydimethylsiloxane structure and a (meth)acrylic acid alkyl ester.
[9] The dispersant for a boron nitride-containing silicone resin composition according to [8] above, in which a number of silicon atoms forming the polydimethylsiloxane structure of the (meth)acrylic acid ester having at least one polydimethylsiloxane structure is from 3 to 100.
[10] The dispersant for a boron nitride-containing silicone resin composition according to [8] or [9] above, in which a number of carbon atoms of an alkyl group of the (meth)acrylic acid alkyl ester is from 1 to 15.
[11] The dispersant for a boron nitride-containing silicone resin composition according to any one of [8] to [10] above, in which the acryl-silicone copolymer has a weight-average molecular weight in terms of polystyrene of from 10,000 to 300,000.
[12] The dispersant for a boron nitride-containing silicone resin composition according to any one of [8] to [11] above, in which the acryl-silicone copolymer further contains a monomer unit having a carboxyl group, and has an acid value of from 3 mgKOH/g to 95 mgKOH/g.
[13] The dispersant for a boron nitride-containing silicone resin composition according to any one of [8] to [12] above, in which: the acryl-silicone copolymer further contains a monomer unit having a polyalkoxysilyl structure; and a number of moles of the polyalkoxysilyl structure is from 3 to 30 per one molecule of the acryl-silicone copolymer.
[14] An inorganic filler, comprising an inorganic substance; and the dispersant of any one of [8] to [13] above, in which the inorganic substance is boron nitride or a mixture of the boron nitride and an inorganic substance except the boron nitride.
[15] The inorganic filler according to [14] above, in which the boron nitride has a hexagonal crystal structure, and has an average particle diameter on a volume basis (D₅₀) measured by a laser diffraction method of from 0.1 µm to 20 µm.
[16] The inorganic filler according to [14] or [15] above, further containing a silane coupling agent.
[17] The inorganic filler according to [16] above, in which the silane coupling agent includes an oligomer-type silane coupling agent.

### Advantageous Effects of Invention

When the dispersant of the present invention is used, high thixotropy of boron nitride can be reduced and hence the viscosity of a silicone resin composition is reduced as compared to a conventional viscosity. In addition, the stability of the boron nitride against a mechanochemical treatment is improved without any influences on the thermal conductivity and curing characteristic of the resin composition, and hence a cured product obtained by curing the resin composition of the present invention can be utilized in various applications where its thermal conductivity and curing characteristic are exploited.

### Description of Embodiments

A thermosetting silicone resin composition according to one embodiment of the present invention contains a thermosetting silicone resin, an inorganic substance containing boron nitride, and a dispersant. In addition, a silane coupling agent may be added for improving the effects of the dispersant. Materials, dimensions, and the like given in the following description are examples, and the present invention is not limited thereto and may be carried out while being appropriately changed to the extent that the gist thereof is not changed.

### [Thermosetting Silicone Resin]

The thermosetting silicone resin to be used in the present invention only needs to use an organopolysiloxane skeleton having a thermosetting functional group, such as an acryloyl group, a methacryloyl group, an epoxy group, or a styryl group, as a main chain, and the kind thereof is by no means limited. Here, the thermosetting functional group can show a curing reaction by virtue of heat, or can react with any other functional group to cure.

Examples of the thermosetting silicone resin include, out of silicone resins, a silicone rubber to be molded with a roll, the rubber being generally referred to as "millable rubber", a one-liquid type silicone resin in which only one kind of liquid selected from various liquids is used, and a two-liquid type silicone resin in which two kinds of liquids, i.e., a main agent and a curing agent are mixed at the time of its use. Any such resin may be used irrespective of its designation, such as rubber, gel, varnish, or oil, and the presence or absence of denaturation or modification.

There may be used a silicone resin having added thereto a curing agent, an accelerator, a retarder, an age inhibitor, an antioxidant, a stabilizer, a defoaming agent, a flame retardant, a plasticizer, a thickener, or a colorant that has been generally used to the extent that the present invention is not affected.

### [Inorganic Substance]

The boron nitride may be used alone as the inorganic substance to be used in the present invention. Alternatively, the boron nitride may be used in combination with an inorganic substance except the boron nitride. For example, composite systems with alumina, aluminum nitride, and zinc oxide are permitted. When the other inorganic substance is used in combination with the boron nitride, an inorganic filler having the characteristics of the other inorganic substance in a state of maintaining the characteristics of the boron nitride can be obtained. Chemical species to be used in any such combination and a blending ratio therebetween may be appropriately set in accordance with required characteristics of the inorganic filler. More detailed description is given below by taking the boron nitride as an example.

Although the kind of the crystal structure of the boron nitride to be used in the present invention, and the particle diameter thereof are not limited, boron nitride having an average particle diameter on a volume basis (D₅₀: a particle diameter at the time of the accumulation of 50% of all particles) measured by a laser diffraction method of from 0.1 µm to 20 µm is preferably used. Boron nitride having an average particle diameter of from 0.5 µm to 15 µm is more preferred, and boron nitride having an average particle diameter of from 1.0 µm to 10 µm is still more preferred. When the average particle diameter is 20 µm or less, the flowability of the boron nitride at the time of its mixing with the resin is improved, and hence the dispersibility of the boron nitride is improved. Meanwhile, when the average particle diameter is 0.1 µm or more, the number of interfaces between boron nitride particles does not become excessively large as compared to that in the case where the average particle diameter is smaller, and hence the occurrence of resistance at each of the interfaces is suppressed. As a result, high thermal conductivity is obtained.

In addition, the crystal structure of the boron nitride comes in two kinds, i.e., a hexagonal system and a cubic system. However, there is no large difference in thermal conductivity between the two kinds, and hence hexagonal boron nitride is preferred because of its ease of availability.

### [Dispersant]

The dispersant to be used for eliciting the performance of the boron nitride in the present invention is a copolymer obtained by copolymerizing, as monomers, a (meth)acrylic acid ester having at least one polydimethylsiloxane structure (-((CH₃)₂SiO)ₙ-; n represents an integer of 1 or more) and a (meth)acrylic acid alkyl ester. The copolymer is referred to as "acryl-silicone copolymer" herein.

A specific example of the (meth)acrylic acid ester having at least one polydimethylsiloxane structure is dimethicone methacrylate. In addition, specific examples of the (meth)acrylic acid alkyl ester include methyl methacrylate, ethyl methacrylate, butyl methacrylate, ethylhexyl acrylate, and tridecyl acrylate.

The (meth)acrylic acid ester having at least one polydimethylsiloxane structure (-((CH₃)₂SiO)ₙ-; n represents an integer of 1 or more) has a polydimethylsiloxane structure formed of preferably 3 to 100 silicon atoms, more preferably 3 to 50 silicon atoms, still more preferably 3 to 30 silicon atoms. In addition, the (meth)acrylic acid alkyl ester has an alkyl chain formed of preferably 1 to 15 carbon atoms, more preferably 1 to 12 carbon atoms, still more preferably 1 to 9 carbon atoms.

In addition, the dispersant to be used in the present invention is not limited to a bipolymer formed only of those components, and may be a multi-component copolymer obtained by further copolymerizing three or more kinds of monomers selected from, for example, monomers each containing a vinyl group, such as vinyl methyl ether (meth)acrylate, and monomers each containing a carboxyl group, such as (meth)acrylic acid. For example, a copolymer obtained by polymerizing an arbitrary combination of a plurality of kinds, such as a certain kind of alkyl group of an ester residue, a certain kind of alkyl group including a siloxane moiety, and an acrylate or a methacrylate, may be used.

Specific examples of the dispersant may include: SYMAC (trademark) US-350 manufactured by Toagosei Co., Ltd.; and KP-541, KP-574, and KP-578 manufactured by Shin-Etsu Chemical Co., Ltd.

Although the molecular weight of the acryl-silicone copolymer serving as the dispersant is not particularly limited, its weight-average molecular weight in terms of polystyrene obtained by gel permeation chromatography (GPC) measurement is preferably from 10,000 to 300,000 in terms of the ease of work, and the ease with which modifying and dispersing effects are expressed. The weight-average molecular weight is more preferably from 50,000 to 250,000, still more preferably from 100,000 to 200,000. When the average molecular weight is 10,000 or more, the copolymer is increased in viscosity and hence becomes difficult to knead, but the modifying and dispersing effects are easily expressed. Meanwhile, when the average molecular weight is 300,000 or less, the copolymer tends to be reduced in viscosity and hence become easier to knead, though the modifying and dispersing effects are hardly expressed.

When the acryl-silicone copolymer serving as the dispersant contains a monomer unit having a carboxyl group, its acid value desirably falls within the range of from 3 mgKOH/g to 95 mgKOH/g. As the acid value of the dispersant becomes higher, the amount of ammonia to be produced in association with a mixing treatment for the dispersant and the boron nitride is suppressed. However, when the acid value is excessively high, the dispersibility of the boron nitride at the time of its mixing with the thermosetting silicone resin may deteriorate, or a problem, such as the inhibition of the polymerization reaction of the thermosetting silicone resin, may occur. The acid value is more preferably from 3 mgKOH/g to 70 mgKOH/g, still more preferably from 3 mgKOH/g to 50 mgKOH/g. The acid value is a value measured in conformity with JIS K 2501. Specifically, the acid value is a value determined by: preparing a solution of the sample in ethanol having a concentration of 5 g/L; and subjecting the solution to potentiometric titration with a solution of potassium hydroxide in 2-propanol having a concentration of 0.1 mol/L. When the dispersant is free of any carboxyl group, a value for the acid value is substantially 0 mgKOH/g.

When the acryl-silicone copolymer serving as the dispersant contains a monomer unit having a polyalkoxysilyl structure, the number of moles of the polyalkoxysilyl structure desirably falls within the range of from 3 to 30 per one molecule of the acryl-silicone copolymer. The polyalkoxysilyl structure reacts with a polar group of the filler to improve the effects of the dispersant. When the number of moles of the polyalkoxysilyl structure falls within the range of from 3 to 30 per one molecule of the acryl-silicone copolymer, a proper viscosity and a dispersibility-improving effect are easily obtained. The number of moles of the polyalkoxysilyl structure is more preferably from 3 to 20, still more preferably from 5 to 15. The number of moles of the polyalkoxysilyl structure may be calculated by combining GPC and ¹H, ¹³C, or ²⁹Si nuclear magnetic resonance (NMR).

Although a method of polymerizing the monomers at the time of the synthesis of the acryl-silicone copolymer is not particularly limited, living anion polymerization or living radical polymerization is preferred because the degree of polymerization of the copolymer is easily controlled. Those polymerization methods are each a polymerization method in which a growth active species is a stable anion or radical, and each have an advantage in that the degree of polymerization is easily controlled because of the following reason: the active species is stable, and hence a growth terminal is stable even after the consumption of the monomers, and the polymerization is initiated again by adding the monomers.

### [Inorganic Filler]

An inorganic filler according to one embodiment of the present invention is obtained through a drying step after the mixing of an inorganic substance containing boron nitride and the dispersant.

The dispersants may be used alone or in combination thereof. When two or more kinds of the dispersants are used in combination, each of the following methods may be adopted: a method involving performing the mixing while adding the dispersants one kind by one kind to the boron nitride; and a method involving mixing the two or more kinds of the dispersants, and then adding and mixing the dispersants in the boron nitride.

Although a method for the mixing is not particularly limited, the mixing may be performed with, for example, a Henschel mixer, a ball mill, a Nauta mixer, a vibration mill, or a rotation-revolution mixer.

When the dispersant is added to the boron nitride, in order that the amount of an aggregate to be produced may be reduced to the extent possible, the addition is desirably performed as follows: while the boron nitride is stirred, the dispersant dissolved in a small amount of a solvent is added by being sprayed as a mist with compressed air.

In addition, when the solvent is used, the solvent is desirably evaporated through heating with an oven or the like after the mixing of the dispersant with the boron nitride. When the evaporating step is not performed despite the fact that the solvent remains in the mixture, the remaining solvent is responsible for air bubbles and a reduction in dimensional accuracy in a step of molding the resin composition obtained by mixing the mixture with the thermosetting silicone resin.

The theoretical addition amount of the dispersant at the time of the production of the inorganic filler is preferably the minimum coverage of the surfaces of the particles of the boron nitride, and may be determined from the following equation.

Addition amount (g) of dispersant=mass (g) of boron nitride particles×specific surface area (m²/g) of boron nitride particles×molecular weight of dispersant/ (6.02×10²³×13×10⁻²⁰)

An optimum value for the addition amount of the dispersant is generally from 0.1 part by mass to 5.0 parts by mass with respect to 100 parts by mass of the inorganic filler, and the optimum value often falls within the range of from 0.5 part by mass to 2 parts by mass. In actuality, however, the optimum value is determined with reference to physical properties, such as a viscosity, and a suppressing effect on an ammonia gas to be produced in association with a mechanical treatment for the boron nitride.

In addition, a theoretical addition amount in the case where a combination of the boron nitride and an inorganic substance except the boron nitride is used as the inorganic substance is as described below.

Addition amount (g) of dispersant={mass (g) of boron nitride particles×specific surface area (m²/g) of boron nitride particles+mass (g) of inorganic substance except boron nitride×specific surface area (m²/g) of inorganic substance except boron nitride}×molecular weight of dispersant/ (6.02×10²³×13×10⁻²⁰)

### [Silane Coupling Agent]

A silane coupling agent may be further added as a component for improving the effects of the dispersant. Although a method for the addition is not particularly limited, examples thereof include: an integral blending method involving dissolving the silane coupling agent in the thermosetting silicone resin; and a dry blending method involving adding the silane coupling agent to the inorganic filler.

In the case where the silane coupling agent to be used is diluted with a solvent, the dry blending method is exclusively used. In that case, a step of heating the inorganic filler and the silane coupling agent after their mixing to volatilize the solvent is performed. The heating is desirably performed at a temperature higher than the boiling point of the solvent of the silane coupling agent by from about 10°C to about 15°C.

At the time of the addition of the silane coupling agent in the case of the inorganic filler containing the boron nitride of the present invention, an oligomer-type silane coupling agent is desirably used. In that case, an effect equal to or more than that in the case where the dispersant is used alone is obtained.

It is probably because the primary particles of the boron nitride each have a characteristic structure that a silane coupling agent except the oligomer-type silane coupling agent hardly exhibits an effect in the case of the inorganic filler containing the boron nitride. The primary particles of the boron nitride each have a flaky shape, and a flat portion occupying a large part of the surface of each of the particles is extremely inactive. An active site is slightly present on the side surface thereof, and even a low-molecular weight silane coupling agent is assumed to coordinate or bond thereto. However, the low-molecular weight silane coupling agent interacts with a flat portion occupying a large part of boron nitride powder in an extremely poor manner. The oligomer-type silane coupling agent exhibits a high effect because of the foregoing reason, and it is probably because of the foregoing reason that the oligomer-type silane coupling agent and a silane coupling agent having a relatively low molecular weight each exhibit a certain effect on a boron nitride granule in which the ratio of its side surface portion to its surface area is large.

The oligomer-type silane coupling agent is a silicone resin having a relatively low molecular weight, the resin having both an organic functional group and an alkoxysilyl group. The resin has the features of a silane coupling agent, and also has, for example, the following features: its volatility is low; the amount of an alcohol to be produced as a by-product is small; and the resin is polyfunctional. A general condensation level is as follows: the resin is from a dimer to an icosamer.

The number of silicon atoms per one molecule of the oligomer-type silane coupling agent is desirably from 3 to 20, more desirably from 5 to 12. Specific examples thereof may include KC-89S, KR-500, X-40-9225, and X-40-9246 (all of which are manufactured by Shin-Etsu Chemical Co., Ltd.), Dynasylan 9896 (manufactured by Evonik Industries AG), and SR2402 and AY-42-163 (manufactured by Dow Corning Toray Co., Ltd.).

When the dispersant of the present invention and the silane coupling agent are used in combination, the order in which the dispersant and the agent are added, and the like are not particularly limited. The dispersant and the agent may be simultaneously added and mixed, or a method involving separately blending the dispersant and the agent may be adopted. A plurality of kinds of dispersants and a plurality of kinds of typical silane coupling agents or a plurality of kinds of oligomer-type silane coupling agents may be used in combination.

### [Silicone Resin Composition]

A silicone resin composition according to one embodiment of the present invention is a composition containing a thermosetting silicone resin, an inorganic substance containing boron nitride, and the dispersant. In addition, a silane coupling agent may be added to those raw materials. The boron nitride to be used as the inorganic substance may be boron nitride powder (0.01 µm to 30 µm) or boron nitride granules (1 µm to 220 µm), both the powder and the granules may be used, or one of the powder and the granules may be used.

With regard to contents at the time of the blending of the respective components, the content of the inorganic substance containing the boron nitride is preferably from 25 parts by mass to 1,200 parts by mass with respect to 100 parts by mass of the thermosetting silicone resin. The dispersant may be added in an amount of from 0.1 part by mass to 5.0 parts by mass with respect to 100 parts by mass of the inorganic substance, and the amount is preferably from 0.3 part by mass to 3.5 parts by mass, more preferably from 0.5 part by mass to 2.0 parts by mass.

In addition, in order that high thermal conductivity and high flowability may be obtained, the content of the inorganic substance with respect to the total of the volumes of the thermosetting silicone resin and the inorganic substance (the volume of the inorganic substance/the total of the volumes of the thermosetting silicone resin and the inorganic substance) is set to preferably from 30 vol% to 85 vol%, more preferably from 30 vol% to 70 vol%, still more preferably from 35 vol% to 70 vol%. The content is a value calculated from the densities and masses of the thermosetting silicone resin, the inorganic substance, and the dispersant serving as the raw materials for the resin composition at room temperature (25°C).

When the content of the inorganic substance with respect to the total of the volumes of the thermosetting silicone resin and the inorganic substance is 30 vol% or more, the amount of the inorganic substance is sufficient and hence the thermal conductivity of the resin composition can be improved. In addition, when the content is 85 vol% or less, the flowability of the resin composition can be satisfactorily secured and hence satisfactory moldability is obtained.

A molded product obtained by curing and molding the silicone resin composition having added thereto the inorganic substance so that the above-mentioned content may be obtained has a high thermal conductivity. The thermal conductivity is preferably from 1.0 W/m·K to 8.0 W/m·K, more preferably from 1.3 W/m·K to 7.0 W/m·K, still more preferably from 1.5 W/m·K to 6.5 W/m·K, though a preferred value varies depending on the inorganic substance to be added. When the thermal conductivity falls within the range of from 1.0 W/m·K to 8.0 W/m·K, the heat-radiating property of the composition is improved, and hence its temperature can be prevented from increasing during its use.

The silicone resin composition of the present invention can be cured without any problem even when the dispersant is added to reduce its viscosity.

When the cured molded product of the present invention is used as a raw material for a heat-radiating sheet, its hardness is represented by one of an Asker C hardness, a type D durometer hardness, and a type A durometer hardness. Here, the Asker C hardness is a value measured with an Asker rubber hardness meter type C specified in JIS K 7312, and the type A durometer hardness and the type D durometer hardness are values measured with durometers type A and type D specified in JIS K 6253.

The specifications of methods of measuring the Asker C hardness, the type D durometer hardness, and the type A durometer hardness are different from one another, and hence a hardness based on one specification cannot be simply converted into a hardness based on another specification. Which one of the standards, i.e., the Asker C hardness, the type D durometer hardness, and the type A durometer hardness is used to measure the hardness of the cured molded product is appropriately selected in consideration of, for example, the applications and properties of the measurement object.

When the cured molded product of the present invention is used as a raw material for a heat-radiating sheet, its Asker C hardness is preferably 20 or more and less than 100, more preferably from 25 to 80, still more preferably from 30 to 70, its type D durometer hardness is preferably 20 or less, more preferably 15 or less, still more preferably 10 or less, and its type A durometer hardness is preferably from 5 to 95, more preferably from 10 to 90, still more preferably from 15 to 80.

However, the above-mentioned hardnesses are values in the case where the molded product is used as a raw material for a heat-radiating sheet, and values in the case where the molded product is used as a raw material for heat-radiating grease are not limited thereto. That is, in the case of the heat-radiating grease, the hardness (consistency) of the grease can be designed, and hence the hardness of the cured molded product of the present invention is not limited.

At the time of the production of the silicone resin composition, the order in which the respective raw materials are mixed is not limited. In other words, the following order is permitted: an inorganic filler is produced from the inorganic substance containing the boron nitride and the dispersant, and the inorganic filler and the thermosetting silicone resin are mixed. Alternatively, the dispersant and the inorganic substance containing the boron nitride may be simultaneously mixed in the thermosetting silicone resin without the production of the inorganic filler.

### Examples

Now, the present invention is described in more detail by way of typical examples. These examples are merely for illustrative purposes, and the present invention is by no means limited thereto.

Methods of measuring the viscosity of a composition of each of Examples and Comparative Examples, the concentration of ammonia to be produced in association with a mechanical treatment for boron nitride, and the thermal conductivity and hardness of a molded product are as described below.

### (1) Viscosity

The viscosities (mPa·s) of an obtained resin composition were measured with FLOW TESTER CFT-500 manufactured by Shimadzu Corporation (nozzle diameter: 0.5 mmΦ, length: 1 mm, 80°C) at loads of 20 kg, 30 kg, and 40 kg.

### (2) Ammonia Concentration

When the dispersibility of boron nitride is poor, ammonia is produced by the decomposition of the boron nitride in association with a mixing treatment. Accordingly, an indicator of the dispersibility of each dispersant for the boron nitride can be obtained by measuring an ammonia concentration.

The amount of ammonia to be produced in association with a mechanical treatment for boron nitride was evaluated with a ball mill using balls for pulverization made of alumina. 50 Grams of the boron nitride, each dispersant, a silane coupling agent, and 500 g of alumina 10 mmΦ balls were set in a 5-liter high-density polyethylene container (pot), and were treated at 90 rpm for 1 hour. After that, the concentration of ammonia in air in the upper portion of the pot was determined by gas chromatography.

### (3) Thermal Conductivity

A resin composition was subjected to press molding under the conditions of 90°C and 30 minutes to produce two circular sheets each having a thickness of 5 mm. The sensor portion of a hot disk method thermal property-measuring apparatus manufactured by Kyoto Electronics Manufacturing Co., Ltd. (TPS2500S) was sandwiched between the sheets, and the thermal conductivity (W/m·K) of each of the sheets was measured under a state in which the sheets were tightened with a torque wrench. The measurement was performed under an environment at 23°C.

### (4) Hardness

The hardness of a molded product was measured with a type A durometer specified in JIS K 6253 at 25°C.

### Example 1:

0.217 Gram of a dispersant C having a solid content concentration of 29 mass% (SYMAC (trademark) US-350 manufactured by Toagosei Co., Ltd.) was added to 7.000 g of boron nitride powder A (SHOBN (trademark) UHP-1K manufactured by Showa Denko K.K., density: 2.26 g/cm³). The dispersant C is a copolymer of a silicone macromonomer and an acrylic monomer.

The following step was defined as one set: the materials were mixed with a rotation-revolution mixer (AWATORI RENTARO (trademark) AR310 manufactured by Thinky Corporation) at 2,000 rpm for 40 seconds, and were then mixed with a hand. The set was repeated a total of three times, and then the mixture was dried at 130°C for 1 hour to produce an inorganic filler 1. At this time, the solid content of the dispersant C is 0.9 part by mass with respect to 100 parts by mass of the inorganic filler.

3.408 Grams of a thermosetting silicone resin (TSE3070(A) manufactured by Momentive Performance Materials Japan LLC, density: 0.97 g/cm³) was added to the inorganic filler 1, and the materials were mixed with the same rotation-revolution mixer under the same conditions to provide a resin composition. 1.6 Grams of the resultant resin composition was weighed and its viscosities were measured. The results are shown in Table 1. The content of an inorganic substance with respect to the total of the volumes of the thermosetting silicone resin and the inorganic substance at this time is 46.9 vol%.

In Table 1, numerical values (phf) for the dispersant and silane coupling agent of each of the compositions of Examples and Comparative Examples are addition amounts (numbers of parts by mass) in the case where the amount of the inorganic filler is defined as 100 parts by mass.

### Example 2:

A resin composition was produced by the same method as that of Example 1 except that 0.105 g of a dispersant D having a solid content concentration of 60 mass% (KP-541 manufactured by Shin-Etsu Chemical Co., Ltd.) was used instead of the dispersant C. The dispersant D is a product obtained by dissolving a graft copolymer of an acrylic polymer and polydimethylsiloxane in isopropanol. The produced resin composition was evaluated for its viscosities. The results are shown in Table 1.

### Example 3:

0.063 Gram of a solid dispersant E (KP-578 manufactured by Shin-Etsu Chemical Co., Ltd.) was added to 7.000 g of the boron nitride powder A, and the following step was repeated three times: the materials were mixed with the same rotation-revolution mixer as that of Example 1 at 2,000 rpm for 40 seconds, and were then mixed with a hand. The dispersant E is a copolymer of an acrylic polymer and polydimethylsiloxane.

3.408 Grams of the thermosetting silicone resin TSE3070(A) was added to the resultant mixture, and the materials were mixed with the same rotation-revolution mixer under the same conditions to provide a resin composition. The resultant resin composition was evaluated for its viscosities. The results are shown in Table 1.

### Example 4:

0.063 Gram of the solid dispersant E was added to 3.408 g of the thermosetting silicone resin TSE3070(A), and the materials were mixed with the same rotation-revolution mixer as that of Example 1 under the same conditions as those of Example 1. After that, 7.000 g of the boron nitride powder A was added to the mixture, and the materials were further mixed under the same conditions to provide a resin composition. The resultant resin composition was evaluated for its viscosities. The results are shown in Table 1.

### Example 5:

A resin composition was obtained by the same method as that of Example 3 except that boron nitride granules B (TECO2009 manufactured by Momentive Performance Materials Japan LLC) were used instead of the boron nitride powder A, and the resin composition was evaluated for its viscosities. The results are shown in Table 1.

### Example 6:

A resin composition was obtained by the same method as that of Example 3 except that a solid dispersant F (KP-574 manufactured by Shin-Etsu Chemical Co., Ltd.) was used instead of the dispersant E, and the resin composition was evaluated for its viscosities. The results are shown in Table 1. The dispersant F is a graft copolymer of an acrylic polymer and polydimethylsiloxane.

### Example 7:

0.0315 Gram of the dispersant E and 0.0315 g of an oligomer-type silane coupling agent I (hydrolysis condensate of an alkylsilane; Dynasylan 9896 manufactured by Evonik Japan Co., Ltd.) were added to 7.000 g of the boron nitride powder A, and the materials were mixed with the same rotation-revolution mixer as that of Example 1 under the same conditions as those of Example 1. At this time, the solid content of each of the dispersant E and the silane coupling agent I is 0.45 part by mass with respect to 100 parts by mass of the inorganic filler.

In addition, 7.000 g of the boron nitride powder A (UHP-1K) was added to the resultant mixture, and the materials were further mixed under the same conditions. The resultant resin composition was evaluated for its viscosities. The results are shown in Table 1.

### Comparative Example 1:

No dispersant was added to 7.000 g of the boron nitride powder A, and 3.408 g of the thermosetting silicone resin TSE3070(A) was added thereto, followed by mixing with the same rotation-revolution mixer as that of Example 1 under the same conditions as those of Example 1. The resultant resin composition was evaluated for its viscosities. The results are shown in Table 1.

### Comparative Example 2:

A resin composition was obtained by the same method as that of Comparative Example 1 except that 7.000 g of the boron nitride granules B were used instead of the boron nitride powder A, and the resin composition was evaluated for its viscosities. The results are shown in Table 1.

### Comparative Example 3:

A resin composition was obtained by the same method as that of Example 3 except that: no dispersant was added to 7.000 g of the boron nitride powder A; and 0.063 g of the oligomer-type silane coupling agent I was added thereto. The resin composition was evaluated for its viscosities. The results are shown in Table 1.

### Comparative Example 4:

A resin composition was obtained by the same method as that of Example 3 except that: no dispersant was added to 7.000 g of the boron nitride powder A; and 0.063 g of a monomer-type silane coupling agent J (octyltriethoxysilane; Dynasylan OCTEO manufactured by Evonik Japan Co., Ltd.) was added thereto. The results of the viscosity evaluation of the obtained resin composition are shown in Table 1.

### Comparative Example 5:

A sample was prepared by the same method as that of Example 3 except that 0.063 g of a dispersant G formed of a block-type copolymer serving as a hyperbranched polyester (DISPERBYK-2152 manufactured by BYK-Chemie Japan) was added instead of the dispersant E, and the sample was evaluated for its viscosities. The results are shown in Table 1.

### Comparative Example 6:

A sample was prepared by the same method as that of Example 3 except that 0.063 g of a dispersant H serving as a non-silicone dispersant formed of a phosphoric acid ester compound (BYK-W 9010 manufactured by BYK-Chemie Japan) was added instead of the dispersant E, and the sample was evaluated for its viscosities. The results are shown in Table 1.

**Table 1**

| | Boron nitride | | Dispersant (phf) | | | | | | Silane coupling agent (phf) | | Flow tester viscosity (mPa·s) | | |
|---|---|---|---|---|---|---|---|---|---|---|---|---|---|
| | A | B | C | D | E | F | G | H | I | J | 20 kg load | 30 kg load | 40 kg load |
| Example 1 | ○ | | 0.9 | | | | | | | | 290 | 160 | 88 |
| Example 2 | ○ | | | 0.9 | | | | | | | 245 | 145 | 57 |
| Example 3 | ○ | | | | 0.9 | | | | | | 245 | 142 | 76 |
| Example 4 | ○ | | | | 0.9 | | | | | | 290 | 200 | 100 |
| Example 5 | | ○ | | | 0.9 | | | | | | 310 | 220 | 110 |
| Example 6 | ○ | | | | | 0.9 | | | | | 387 | 241 | 148 |
| Example 7 | ○ | | | | 0.45 | | | | 0.45 | | 195 | 100 | 43 |
| Comparative Example 1 | ○ | | | | | | | | | | 1,050 | 440 | 290 |
| Comparative Example 2 | | ○ | | | | | | | | | Unmeasurable | 800 | 390 |
| Comparative Example 3 | ○ | | | | | | | | 0.9 | | 557 | 300 | 190 |
| Comparative Example 4 | ○ | | | | | | | | | 0.9 | 670 | 367 | 233 |
| Comparative Example 5 | ○ | | | | | | 0.9 | | | | 685 | 432 | 265 |
| Comparative Example 6 | ○ | | | | | | | 0.9 | | | 812 | 557 | 300 |

| | | | | | | | | | | | | | |
|---|---|---|---|---|---|---|---|---|---|---|---|---|---|
| * phf (parts per hundred filler): the addition amount (number of parts by mass) of each of the dispersant and the silane coupling agent per 100 parts by mass of the inorganic filler Boron nitride A: SHOBN UHP-1K (manufactured by Showa Denko K.K.) Boron nitride B: TECO2009 (manufactured by Momentive Performance Materials Inc.) Dispersant C: SYMAC US-350 (manufactured by Toagosei Co., Ltd.) Dispersant D: KP-541 (manufactured by Shin-Etsu Chemical Co., Ltd.) Dispersant E: KP-578 (manufactured by Shin-Etsu Chemical Co., Ltd.) Dispersant F: KP-574 (manufactured by Shin-Etsu Chemical Co., Ltd.) Dispersant G: DISPERBYK-2152 (manufactured by BYK-Chemie Japan) Dispersant H: BYK-W 9010 (manufactured by BYK-Chemie Japan) Silane coupling agent I: Dynasylan 9896 (manufactured by Evonik Japan Co., Ltd.) Silane coupling agent J: Dynasylan OCTEO (manufactured by Evonik Japan Co., Ltd.) | | | | | | | | | | | | | |

### Examples 8 to 12 and Comparative Examples 7 to 9:

In order for stability against a shear force to be evaluated, the amount of ammonia to be produced in association with the decomposition of boron nitride at the time of shearing with a ball mill was determined. 50 Grams of the boron nitride powder A (UHP-1K), each dispersant and a silane coupling agent shown in Table 2, and 500 g of alumina 10 mmΦ balls were loaded into a 5-liter high-density polyethylene container (in Comparative Example 7, the dispersant and the silane coupling agent were not added), and were treated at 90 rpm for 1 hour. After that, the concentration of ammonia in a gas in an upper portion in the pot was determined by gas chromatography and used as an indicator of the stability. The results are shown in Table 2.

**Table 2**

| | Dispersant (g) | | | | | Silane coupling agent (g) | | Concentration of ammonia (ppm by volume) |
|---|---|---|---|---|---|---|---|---|
| | C | D | E | G | H | I | J | |
| Example 8 | 1.72 | | | | | | | 3 |
| Example 9 | | 0.50 | | | | | | 41 |
| Example 10 | | | 0.50 | | | | | 34 |
| Example 11 | | | 0.25 | | | 0.25 | | 40 |
| Example 12 | | | 0.25 | | | | 0.25 | 29 |
| Comparative Example 7 | | | | | | | | 200 |
| Comparative Example 8 | | | | | | 0.50 | | 95 |
| Comparative Example 9 | | | | | | | 0.50 | 100 |
| Comparative Example 10 | | | | 0.50 | | | | 115 |
| Comparative Example 11 | | | | | 0.50 | | | 140 |

### Examples 13 to 15, and Comparative Examples 12 and 13:

The dispersant C, the dispersant E, and the silane coupling agent I were added in masses shown in Table 3 to 14.00 g of the boron nitride powder A (in Comparative Example 12, the dispersants and the silane coupling agent were not added). Next, 14.10 g of a two-liquid type thermosetting silicone resin TSE3070 in which a main agent and a curing agent had been blended at a mass ratio of 1:2 in advance was added to the mixture, and the following step was repeated three times: the materials were mixed with the same rotation-revolution mixer as that of Example 1 at 2,000 rpm for 40 seconds, and were then mixed with a hand. Thus, resin compositions were obtained. Each of the resultant resin compositions was subjected to press molding under the conditions of 90°C and 30 minutes, and the resultant molded product was evaluated for its curing characteristic, thermal conductivity, and hardness. The results are shown in Table 3.

### Examples 16 to 18, and Comparative Examples 14 and 15:

The dispersant C, the dispersant E, and the silane coupling agent I were added in masses shown in Table 3 to a mixture of 7.11 g of the boron nitride powder A and 28.45 g of alumina powder (AS-05 manufactured by Showa Denko K.K.) (in Comparative Example 14, the dispersants and the silane coupling agent were not added). Next, 4.44 g of a two-liquid type thermosetting silicone resin TSE3070 in which a main agent and a curing agent had been blended at a mass ratio of 1:1 in advance was added to the mixture, and the following step was repeated three times: the materials were mixed with the same rotation-revolution mixer as that of Example 1 at 2,000 rpm for 40 seconds, and were then mixed with a hand. Thus, resin compositions were obtained. Each of the resultant resin compositions was subjected to press molding under the conditions of 90°C and 30 minutes, and the resultant molded product was evaluated for its cured state, thermal conductivity, and hardness. The results are shown in Table 3.

**Table 3**

| | Inorganic filler | | Dispersant (g) | | Silane coupling agent (g) | Cured state | Thermal conductivity (W/m·K) | Hardness (type A) |
|---|---|---|---|---|---|---|---|---|
| | Boron nitride | Alumina | C | E | I | | | |
| Example 13 | ○ | | 0.483 | | | Satisfactory | 1.5 | 50 |
| Example 14 | ○ | | | 0.140 | | Satisfactory | 1.6 | 53 |
| Example 15 | ○ | | | 0.070 | 0.070 | Satisfactory | 1.6 | 52 |
| Example 16 | ○ | ○ | 1.226 | | | Satisfactory | 5.8 | 31 |
| Example 17 | ○ | ○ | | 0.356 | | Satisfactory | 5.9 | 30 |
| Example 18 | ○ | ○ | | 0.178 | 0.178 | Satisfactory | 6.0 | 31 |
| Comparative Example 12 | ○ | | | | | Curing failure | 1.6 | 36 |
| Comparative Example 13 | ○ | | | | 0.140 | Satisfactory | 1.4 | 52 |
| Comparative Example 14 | ○ | ○ | | | | Curing failure | 5.9 | 20 |
| Comparative Example 15 | ○ | ○ | | | 0.356 | Satisfactory | 5.8 | 31 |

As can be seen from the results of Examples and Comparative Examples (Table 1 and Table 2), when the dispersant of the present invention is used, the viscosities of each of the obtained resin compositions reduce (Examples 1 to 7 and Comparative Examples 1 to 6), and the amount of ammonia to be produced in association with the mechanical treatment for the boron nitride reduces (Examples 8 to 12 and Comparative Examples 7 to 11).

In addition, with regard to the thermal conductivity of each of the resin compositions, when the boron nitride or the boron nitride/alumina mixed system is used as an inorganic substance, deterioration due to the use of the dispersant of the present invention is not observed (Examples 13 to 18 and Comparative Examples 12 to 15). Further, the addition of the dispersant of the present invention improves the curing characteristic as compared to that when the dispersant is not added (Comparative Example 12 and Examples 13 to 15, and Comparative Example 14 and Examples 16 to 18).

### Industrial Applicability

The cured product obtained by curing the resin composition of the present invention can be used in applications where the thermal conductivity of boron nitride is exploited, such as an insulative heat-radiating sheet, heat-radiating grease, an insulative heat-radiating pressure-sensitive adhesive sheet, and an insulative heat-radiating adhesive sheet each serving as a heat-radiating member indispensable to an electronic part, sealing materials, the periphery of a printed wiring board, power modules, and the periphery of a large power supply apparatus.

## Claims

1. A silicone resin composition, containing: a thermosetting silicone resin; an inorganic substance; and a dispersant, in which: the dispersant includes a copolymer of a (meth)acrylic acid ester having at least one polydimethylsiloxane structure and a (meth)acrylic acid alkyl ester; and the inorganic substance is boron nitride or a mixture of the boron nitride and an inorganic substance except the boron nitride.

2. The silicone resin composition according to claim 1, in which: a content of the inorganic substance with respect to a total of volumes of the thermosetting silicone resin and the inorganic substance (a volume of the inorganic substance/the total of the volumes of the thermosetting silicone resin and the inorganic substance) is from 30 vol% to 85 vol%; and the dispersant is incorporated in an amount of from 0.1 part by mass to 5.0 parts by mass with respect to 100 parts by mass of the inorganic substance.

3. The silicone resin composition according to claim 1 or 2, in which the thermosetting silicone resin has an organopolysiloxane skeleton having at least one kind of thermosetting functional group selected from an acryloyl group, a methacryloyl group, an epoxy group, and a styryl group.

4. The silicone resin composition according to any one of claims 1 to 3, further containing a silane coupling agent.

5. The silicone resin composition according to claim 4, in which the silane coupling agent is an oligomer-type silane coupling agent.

6. A cured product of the silicone resin composition of any one of claims 1 to 5.

7. The cured product according to claim 6, in which a hardness of the cured product includes one of an Asker C hardness of 20 or more and less than 100, a type D durometer hardness of 20 or less, and a type A durometer hardness of from 5 to 95.

8. A dispersant for a boron nitride-containing silicone resin composition, comprising an acryl-silicone copolymer formed of a structure obtained by copolymerizing a (meth)acrylic acid ester having at least one polydimethylsiloxane structure and a (meth)acrylic acid alkyl ester.

9. The dispersant for a boron nitride-containing silicone resin composition according to claim 8, in which a number of silicon atoms forming the polydimethylsiloxane structure of the (meth)acrylic acid ester having at least one polydimethylsiloxane structure is from 3 to 100.

10. The dispersant for a boron nitride-containing silicone resin composition according to claim 8 or 9, in which a number of carbon atoms of an alkyl group of the (meth)acrylic acid alkyl ester is from 1 to 15.

11. The dispersant for a boron nitride-containing silicone resin composition according to any one of claims 8 to 10, in which the acryl-silicone copolymer has a weight-average molecular weight in terms of polystyrene of from 10,000 to 300,000.

12. The dispersant for a boron nitride-containing silicone resin composition according to any one of claims 8 to 11, in which the acryl-silicone copolymer further contains a monomer unit having a carboxyl group, and has an acid value of from 3 mgKOH/g to 95 mgKOH/g.

13. The dispersant for a boron nitride-containing silicone resin composition according to any one of claims 8 to 12, in which: the acryl-silicone copolymer further contains a monomer unit having a polyalkoxysilyl structure; and a number of moles of the polyalkoxysilyl structure is from 3 to 30 per one molecule of the acryl-silicone copolymer.

14. An inorganic filler, comprising an inorganic substance; and the dispersant of any one of claims 8 to 13, in which the inorganic substance is boron nitride or a mixture of the boron nitride and an inorganic substance except the boron nitride.

15. The inorganic filler according to claim 14, in which the boron nitride has a hexagonal crystal structure, and has an average particle diameter on a volume basis (D₅₀) measured by a laser diffraction method of from 0.1 µm to 20 µm.

16. The inorganic filler according to claim 14 or 15, further containing a silane coupling agent.

17. The inorganic filler according to claim 16, in which the silane coupling agent includes an oligomer-type silane coupling agent.
